Europäisches Patentamt

(19) European Patent Office

Office européen des brevets

(11) Numéro de publication : **0 275 982 B1**

(12) **FASCICULE DE BREVET EUROPEEN**

(45) Date de publication du fascicule du brevet :
10.04.91 Bulletin 91/15

(51) Int. Cl.$^5$ : **G01B 11/16, G01B 11/24**

(21) Numéro de dépôt : 88100699.3

(22) Date de dépôt : **19.01.88**

(54) Dispositif d'analyse interférométrique des déformations d'un corps.

(30) Priorité : 20.01.87 LU 86742

(43) Date de publication de la demande :
27.07.88 Bulletin 88/30

(45) Mention de la délivrance du brevet :
10.04.91 Bulletin 91/15

(84) Etats contractants désignés :
AT BE CH DE ES FR GB GR IT LI LU NL SE

(56) Documents cités :
FR-A- 2 292 213
APPLIED OPTICS, vol. 21, no. 14, 15 juillet
1982, pages 2558-2562, New York, US; M.L.
BASEHORE et al.: "Displacement fields (U,W)
obtained simultaneously by moiré interferometry"
OPTICAL ENGINEERING, vol. 24, no. 5, sep-
tembre-octobre 1985, pages 879-881, Bellingham, Washington, US; J.A. TOME et al.:
"Multiplexed moiré interferometry with white
light processing"

(56) Documents cités :
PATENT ABSTRACTS OF JAPAN, vol. 8, no.
208 (P-302)[1645], 21 septembre 1984; & JP-
A-59 91 308 (KAWASAKI JUKOGYO K.K.) 26-
05-1984
STRAIN, no. 1, février 1986, pages 13-19,
Newcastle-upon-Tyne, GB; P. MacKENZIE et
al.: "Measurement of poisson's ratio through
the elastic-plastic transition"

(73) Titulaire : COMMUNAUTE EUROPEENNE DE
L'ENERGIE ATOMIQUE (EURATOM)
Bâtiment Jean Monnet-DG XIII/A1 Plateau du
Kirchberg
L-2920 Luxembourg (LU)

(72) Inventeur : Pirodda, Luciano Universita degli
Studi di
Cagliari Dipartimento di Ingegneria
Meccanica
Piazza d'Armi I-09100 Cagliari (IT)
Inventeur : Albertini, Carlo
Via dei Pini, 17
I-21020 Ispra (IT)
Inventeur : Montagnani, Mario
Via G. Rossi, 5
Bologna (IT)

(74) Mandataire : Weinmiller, Jürgen
Lennéstrasse 9 Postfach 24
W-8133 Feldafing (DE)

## Description

L'invention concerne un dispositif d'analyse interférométrique des déformations d'un corps, comportant un réseau gravé sur la surface de ce corps, une première source de lumière illuminant ladite surface, et une première pellicule photosensible disposée parallèlement à ladite surface et recevant la lumière réfléchie de cette surface à travers un premier réseau optique de référence de dimensions telles qu'on obtient des franges de moiré sur la pellicule photosensible par la superposition dudit réseau gravé et dudit réseau optique.

Un tel dispositif est connu, par exemple du livre "Mechanics of solids", édité par A. Lagarde, 1981, Proceedings of the IVTAM Symposium (1979).

De tels systèmes ont permis de mesurer la déformation avec une bonne précision en se basant sur l'interférence de deux réseaux. On distingue à ce sujet entre deux principes, le premier consistant à projeter optiquement un réseau de lignes sur l'objet à analyser et d'observer l'image de ce réseau à travers un réseau de référence, créant ainsi des franges d'interférence du type moiré. Si l'illumination et/ou une pellicule d'enregistrement sont placées sous des angles adéquats par rapport à la surface analysée, toute déformation de cette surface hors de son plan entraîne une modification des franges de moiré.

Un autre système connu établit l'interférence entre un réseau gravé dans la surface à analyser et un réseau optique et permet d'observer des déformations de la surface dans son propre plan.

Les deux systèmes fournissent des informations noir/blanc et peuvent utiliser des pellicules noir/blanc pour l'enregistrement.

Pour analyser des phénomènes rapides, par exemple des phénomènes de rupture, il importe qu'on puisse utiliser à la fois les deux systèmes cités.

Or, le document Applied Optics, vol. 21 n° 14 du 15 juillet 1982, pages 2558 à 2562, décrit un dispositif d'analyse interférométrique des déformations d'une surface aussi bien dans le plan de cette surface que hors de ce plan. Il utilise deux sources monochromes et cohérentes de lumière et deux miroirs pour produire plusieurs systèmes de franges superposés. L'information concernant les déformations dans le plan d'une part et les déformations hors de ce plan d'autre part en est déduite par un filtrage optique judicieux. Ce dispositif est compliqué.

On connaît, en outre, par le document FR-A-2 292 213 un dispositif d'analyse interférométrique des déformations d'une surface hors d'un plan de référence, mais ce dispositif n'est pas apte à relever en plus les déformations dans ce plan.

L'invention a pour but de proposer un dispositif d'analyse selon le préambule de la revendication 1, permettant de manière simple d'extraire simultanément des informations concernant aussi bien la déformation dans le plan que les déformations hors du plan de la surface à analyser.

Ce but est atteint selon l'invention par le fait qu'une seconde source de lumière d'une seconde longueur d'onde, différente de celle de la première source, projette sur la surface à analyser le long d'un axe oblique l'image d'un deuxième réseau optique, que la lumière réfléchie par ladite surface est enregistrée par une pellicule photosensible pour la seconde longueur d'onde après passage par un troisième réseau optique de dimensions telles qu'on obtient des franges de moiré par la superposition du deuxième réseau et du troisième réseau.

De préférence, les franges obtenues dans les deux longueurs d'onde sont enregistrées sur une pellicule photosensible unique en couleur, qui doit donc être sensible aux deux longueurs d'onde en question.

En ce qui concerne des exemples de mise en oeuvre préférés de l'invention, référence est faite aux sous-revendications.

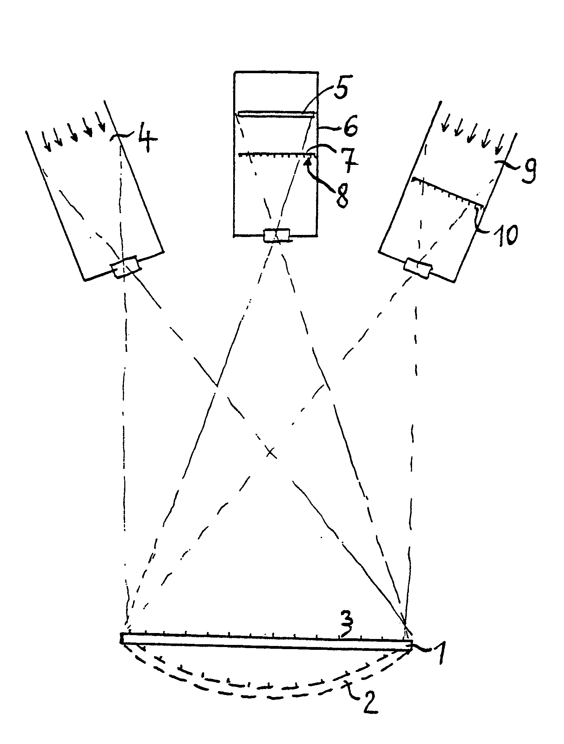

L'invention sera décrite ci-après plus en détail à l'aide d'un exemple de réalisation et de la figure unique, qui montre schématiquement un dispositif d'analyse selon l'invention.

Le dispositif tel que représenté sur la figure constitue une combinaison de deux systèmes connus en soi. L'un des systèmes permet d'analyser les déformations d'une surface d'un corps 1 en plan, alors que l'autre est sensible aux déformations hors du plan, une déformation exagérée de ce type étant représentée par des lignes interrompues 2.

Selon le premier système, la surface du corps 1 porte un réseau 3 tel qu'un réseau orthogonal de lignes en une couleur d'une première longueur d'onde donnée. Ce réseau est illuminé par une source de lumière 4, selon un angle quelconque, la longueur d'onde de cette source de lumière étant choisie pour que le réseau 3 puisse être enregistré sur une pellicule 5 photosensible d'un appareil de prise de vue 6. Sur le chemin optique entre le corps 1 et la pellicule 5 est disposée une diapositive 7, qui porte un autre réseau 8 de même type que le réseau 3, les lignes de ce réseau 8 étant opaques à ladite longueur d'onde. La pellicule 5 est disposée parallèlement à la surface du corps 1 et en regard de celle-ci.

En fonctionnement, la pellicule 5 reçoit une image superposée des réseaux 3 et 8, qui se présente sous forme de franges de moiré, la couleur de ces franges étant celle de la source 4.

Lorsqu'il y a des déformations de la surface du corps, on peut distinguer entre deux types de déformation, à savoir celle dans le plan et celle hors du plan. Les déformations du premier type se traduisent par une modification de l'image de moiré sur la pellicule 5.

Pour l'analyse des déformations du deuxième type, un deuxième système travaillant à une autre longueur d'onde est employé. Il comporte une autre source 9 de lumière et une diapositive 10 avec un second réseau similaire au réseau 8 de l'appareil 6, mais affectant une autre longueur d'onde, à savoir celle de la source 9. L'axe d'incidence de la lumière provenant de cette source sur la surface 3 est oblique. Le réseau 3, qui est gravé sur la surface du corps, n'est pas "visible" par la lumière émise de la source 9, mais il y a interférence entre l'image de la diapositive 10 projetée sur la surface du corps 1 et un autre réseau gravé sur la diapositive 7 de l'appareil de prise de vues 6. Cet autre réseau peut être le même que celui utilisé pour le premier système, si la couleur utilisée pour ce reseau est susceptible de bloquer la lumière des deux longueurs d'onde.

En considération du fait que le deuxième système ne "voit" pas le réseau 3 gravé sur le corps 1, une déformation du corps en plan n'affecte pas les franges d'interférence créées par le deuxième système. Par contre, toute déformation de l'échantillon 1 hors de son plan, par exemple une forme bombée 2, modifie les franges d'interférence du deuxième système. Le dispositif selon l'invention permet donc d'enregistrer simultanément mais de façon dissociable des informations concernant les déformations en plan et celles des déformations hors du plan de surface du corps 1.

L'invention n'est pas limitée à l'exemple de réalisation décrit ci-dessus. On peut en particulier prévoir plusieurs sources de lumière 9 et plusieurs diapositives 10, qui se distinguent d'une part par leur angle d'incidence de la lumière sur le corps 1, et d'autre part par la longueur d'onde de la lumière émise.

En outre, le réseau projeté sur l'échantillon par le deuxième système ou les deuxièmes systèmes peut être généré non pas par une diapositive telle que 10, mais par une technique holographique en utilisant comme source de lumière 9 une source laser, et en créant une interférence holographique entre deux faisceaux provenant de cette même source. De même, la source 4 peut être constituée par une source laser.

En outre, l'invention peut être mise en oeuvre également en dissociant complètement les deux systèmes, c'est-à-dire en prévoyant deux appareils de prise de vues tels que 6 pour les deux systèmes, chacun muni d'une pellicule telle que 5 et d'une diapositive telle que 7 avec un réseau.

Enfin, on peut dupliquer également le premier système en exploitant deux longueurs d'onde différentes. Dans ce cas, il faut graver deux réseaux tels que 3 sur l'échantillon et prévoir deux réseaux optiques tels que 8 dans l'appareil de prise de vues. Si les pas des réseaux, qui sont mis en oeuvre pour les deux longueurs d'onde, sont très différents, on a la possibilité de réaliser une analyse grossière simultanément avec une analyse fine des déformations du corps 1.

Il est à noter que le dispositif selon l'invention permet une analyse très fine des déformations qui est limitée seulement par des problèmes technologiques de la réalisation d'un réseau de faible pas. Par contre, la sensibilité n'est pratiquement pas limitée par celle de la pellicule photosensible, car on y enregistre des franges et non des lignes. Or, les franges sont peu nombreuses et larges, alors que les lignes sont très nombreuses et fines.

## Revendications

1. Dispositif d'analyse interférométrique des déformations d'un corps, comportant au moins un réseau (3) gravé sur la surface de ce corps, une première source de lumière (4) illuminant ladite surface, et une première pellicule photosensible (5) disposée parallèlement à ladite surface et recevant la lumière réfléchie de cette surface à travers un premier réseau optique (8) de référence de dimensions telles qu'on obtient des franges de moiré sur la pellicule photosensible par la superposition dudit réseau gravé (3) et dudit premier réseau optique (8), caractérisé par le fait qu'une seconde source de lumière (9) d'une seconde longueur d'onde, différente de celle de la première source (4), projette sur la surface à analyser le long d'un axe oblique l'image d'un deuxième réseau optique (10), que la lumière réfléchie par ladite surface est enregistrée par une pellicule photosensible pour la seconde longueur d'onde après passage par un troisième réseau optique de dimensions telles qu'on obtient des franges de moiré par la superposition desdits deuxième (10) et troisième réseaux optiques

2. Dispositif selon la revendication 1, caractérisé en ce que les deux systèmes de franges sont enregistrés sur une pellicule photosensible unique en couleurs (5) qui est sensible aux première et seconde longueurs d'onde.

3. Dispositif selon la revendication 1 ou 2, caractérisé en ce que le premier réseau optique (8) et/ou le deuxième réseau optique (10) sont obtenus selon la technique holographique en utilisant une source laser comme première et/ou seconde sources de lumière (4, 9).

4. Dispositif selon l'une des revendications précédentes, caractérisé en ce qu'il comporte au moins deux réseaux de pas et de couleur différents gravés sur ladite surface, et, de façon correspondante, au moins deux réseaux optiques de même type que ledit premier réseau optique (8), permettant de créer au moins deux systèmes de franges moiré de même type mais de pas différent.

5. Dispositif selon l'une des revendications précédentes, caractérisé en ce qu'il comporte au moins deux réseaux optiques de même type que ledit deuxième réseau optique (10), de couleur et de pas différents, et, de façon correspondante, au moins deux réseaux optiques de même type que ledit troisième réseau optique, permettant de créer au moins deux systèmes de franges de moiré de même type mais de pas différent.

## Ansprüche

1. Vorrichtung zur interferometrischen Analyse eines Körpers, mit mindestens einem Netz (3), das auf die Oberfläche dieses Körpers graviert ist, einer ersten Lichtquelle (4), die diese Oberfläche beleuchtet, und einem ersten lichtempfindlichen Film (5), der parallel zu dieser Oberfläche angeordnet ist und das von dieser Oberfläche reflektierte Licht über ein erstes optisches Bezugsnetz (8) empfängt, das solche Abmessungen hat, daß man durch Überlagerung des gravierten Netzes (3) und des optischen Netzes (8) Moiréränder auf dem lichtempfindlichen Film erhält, dadurch gekennzeichnet, daß eine zweite Lichtquelle (9) einer zweiten Wellenlänge, ungleich der der ersten Quelle (4), auf die zu analysierende Oberfläche entlang einer schrägen Achse das Bild eines zweiten optischen Netzes (10) wirft, daß das von dieser Oberfläche reflektierte Licht von einem für die zweite Wellenlänge lichtempfindlichen Film nach Durchqueren eines dritten optischen Netzes von solchen Abmessungen aufgezeichnet wird, daß man durch das Überlagern des zweiten Netzes (10) und des dritten Netzes Moiréränder erhält.

2. Vorrichtung nach Anspruch 1, dadurch gekennzeichnet, daß die beiden Rändersysteme auf einem einzigen lichtempfindlichen Farbfilm (5) aufgezeichnet werden, der auf die erste und die zweite Wellenlänge anspricht.

3. Vorrichtung nach Anspruch 1 oder 2, dadurch gekennzeichnet, daß das erste optische Netz (8) und-/oder das zweite optische Netz (10) gemäß der Holographietechnik erhalten werden, indem man eine Laserquelle als erste und/oder zweite Lichtquelle (4, 9) verwendet.

4. Vorrichtung nach einem der vorhergehenden Ansprüche, dadurch gekennzeichnet, daß sie mindestens zwei Netze verschiedenen Rasterschritts und verschiedener Farbe auf der Oberfläche eingraviert, und dementsprechend mindestens zwei optische Systeme gleichen Typs wie das erste optische System (8) aufweist, die es ermöglichen, mindestens zwei Systeme von Moiréndern gleichen Typs, aber unterschiedlichen Rasterschritts zu erzeugen.

5. Vorrichtung nach einem der vorhergehenden Ansprüche, dadurch gekennzeichnet, daß sie mindestens zwei optische Netze gleichen Typs wie das zweite optische System (10) verschiedenen Rasterschritts und verschiedener Farbe und dementsprechend mindestens zwei optische Systeme gleichen Typs wie das dritte optische System aufweist, die es ermöglichen, mindestens zwei Systeme von Moirérändern gleichen Typs, aber unterschiedlichen Rasterschritts zu erzeugen

## Claims

1. A device for the interferometrical analysis of deformations of a specimen, comprising a grating (3) engraved on the surface of this specimen, a first light source (4) illuminating said surface, and a first photosensitive film (5) disposed parallely to said surface and receiving the light reflected from this surface through a first optical reference grating (8) of such dimensions that moiré fringes are obtained on the photosensitive film by the superposition of said engraved grating (3) and said optical grating (8), characterized in that a second light source (9) of a second wavelength different to that of the first source (4) projects along an oblique axis the image of a second optical grating (10) onto the surface to be analysed, that the light reflected by said surface is recorded by a photosensitive film for the second wavelength after passing through a third optical grating of such dimensions that moiré fringes are obtained by the superposition of the second grating (10) and the third optical grating.

2. A device according to claim 1, characterized in that the two systems of fringes are recorded on a unique photosensitive colour film (5) which is sensitive to the first and second wavelengths.

3. A device according to claim 1 or 2, characterized in that the first optical grating (8) and/or the second optical grating (10) are obtained according to the holographic technique by using a laser source as first and/or second light sources (4, 9).

4. A device according to one of the preceding claims, characterized in that it comprises at least two gratings of different pitch and colour engraved on said surface, and, correspondingly, at least two optical gratings of the same type as said first optical grating (8), permitting to create at least two moiré fringe systems of the same type but of different pitch.

5. A device according to one of the preceding claims, characterized in that it comprises at least two optical gratings of the same type as said second optical grating (10), of different colour and pitch, and correspondingly, at least two optical gratings of the same type as said third optical grating, permitting to create at least two moiré fringe systems of the same type but of different pitch.